# EUROPEAN PATENT SPECIFICATION

(11) **EP 1 142 050 B1**
(45) Date of publication and mention of the grant of the patent: **28.09.2016**
(21) Application number: 99966284.4
(22) Date of filing: 14.12.1999
(51) Int. Cl.: H01M 10/12, H01M 10/44, H01M 10/52, H01M 2/12, H01M 10/34, B01J 33/00

(54) **IMPROVED CATALYST DESIGN FOR VRLA BATTERIES**
VERBESSERTES KATALYSATORDESIGN FÜR VRLA-BATTERIEN
CONCEPTION DE CATALYSEUR PERFECTIONNÉ POUR BATTERIES AU PLOMB ET À SOUPAPE DE RÉGULATION (VRLA)

(30) Priority: 14.12.1998 US 112305 P; 24.12.1998 US 113579 P; 12.08.1999 US 148536 P
(43) Date of publication of application: 10.10.2001
(73) Proprietor: Philadelphia Scientific LLC, Montgomeryville, PA 18936 (US)
(72) Inventor: JONES, William, E., M., Freeport (BS); CLAPPER, Joshua, E., West Chester, PA 19380 (US); VANASSE, Harold, A., West Chester, PA 19380 (US)
(74) Representative: Callies, Rainer Michael
(86) International application number: PCT/US1999/029793
(87) International publication number: WO 2000/036684

(56) References cited:
- DE-A1- 2 904 842
- US-A- 4 048 387
- US-A- 4 098 964
- US-A- 4 374 907
- US-A- 4 394 423
- US-A- 4 497 880
- US-A1- 2006 078 791

## Description

### BACKGROUND

### 1. Field of the Invention

The present invention relates to the use of catalysts for improving the service life of valve regulated lead acid (VRLA) cells, and to a catalyst device which may also be applicable to other types of batteries where it is desirable to recombine excess oxygen with hydrogen produced in the battery cell. More particularly, the present invention relates to improved catalyst devices that minimize catalyst poisoning, and preferably can control the temperature of the catalytic reaction.

### 2. Background of the Invention

Significant improvements to VRLA battery cells can be made with the addition of a catalyst for recombining oxygen and hydrogen gasses within the cells as disclosed in U.S. Application Number 09/022,336 filed 2/11/98. One preferred method of adding catalyst to VRLA cells is to couple the catalyst with the pressure relief valve, sometimes referred to as a pressure relief vent or pressure relief vent cap, which provides a convenient means of retrofitting existing cells as well adding catalyst to new cells. A novel catalyst device for use with pressure relief valves is disclosed in U.S. Application Number 09/022,336. While the addition of catalyst provides significant improvement in the performance and of life of VRLA cells, additional improvements to the catalyst itself, particularly with the structures and devices that support or house the catalyst, are believed necessary to gain the full benefits of the catalyst.

High rates of gassing in VRLA battery cells can be caused by conditions such as thermal runaway, malfunctioning power rectifiers, boost charging, charging at abnormally high rates of voltage, and other reasons known in the art. In lead-acid battery cells, oxygen and hydrogen gas is generated due to the electrolysis of water. If a catalyst were installed in a cell experiencing a high rate of gas production, the catalyst would catalyze the oxygen and hydrogen to water in a highly exothermic reaction. The resulting enthalpy could generate enough heat to melt many commonly used plastic materials that compose the battery cover, jar or vent cap assemblies. This high reaction temperature can also limit the materials that can be used to house the active catalytic material.

One catalyst device as described in the above referenced U.S. Application Number 09/022,336 patent application, uses a porous ceramic cartridge to house the catalytic active material. This porous cartridge allows gas to enter the chamber and water vapor to exit the chamber, and prevents the passing of a flame from inside the chamber to outside the chamber if one were to develop due to ignition of the gases. The temperature achieved, as a result of the exothermic reaction, is governed mainly by the amount of gas produced by the battery. In the normal functioning of a VRLA battery, the temperature of reaction is generally not more than 5° to 10°F (-15 °C to -12 °C) above ambient temperature. However, in the case of high rates of gassing, a higher than normal temperature could occur which could lead to melting of the plastic that supports the catalyst cartridge, that composes the vent cap or that composes the cell jar or cell cover. The high temperature could also deform the pressure relief valve that is present in the vent cap for these VRLA cells. A deformed pressure relief valve will change the operating characteristics of the cell. Temperature high enough to melt the plastics used to compose batteries must be avoided.

Another problem found to plague lead acid cells is catalyst poisoning. Precious metal catalysts, such as palladium and platinum are susceptible to poisoning by many chemicals that can limit and negate the effectiveness of the catalysts. Catalyst poisons can be generated in or found in the battery cells. VRLA batteries are constructed of materials that may exhaust gaseous compounds that are poisonous to catalysts. Such poisons include organic compounds such as phalates used as a plasticizer in PVC battery jars and covers, and inorganic compounds such as sulfides, mercaptins, amines, stibine and phosphates whose base chemicals can exist as an impurity in battery plates and exhaust as the plates corrode. Amines and mercaptins are used extensively as curing compounds in multi-part epoxies which are used in the manufacture of cells by many manufacturers. It is also believed that localized areas of high current densities may cause hydrogen sulfide to form within the cells. Hydrogen sulfide may also be a byproduct of the dry charging process that traps sulfur species in the plates which is then released early in the battery's life. It is believed that compounds such as those described above that have a (-2) state of charge can bond with catalyst activation sites rendering the catalyst ineffective. The catalyst can also be poisoned by large chain molecules, such as phalates, that coat the catalyst substrate and then solidifying on it, creating a barrier that prevent the gasses from reaching the catalyst reaction sites. Hydrogen sulfide, SOₓ species, and other sulfides will also poison precious metal catalysts.

The WO 98/21766 refers to the charging of a valve-regulated, lead-acid (VRLA) battery cell.

A storage battery containing a recombination catalyst is described in US-A-4 098 964. It comprises a filter material, which may be glass wool, to keep any acid which might be carried along by the gases away from the catalyst.

US-A-4 394 423 discloses a closure device for lead-acid batteries including a filter of granulated activated carbon for the removal of poisons from the battery discharge gases.

US-A-4 497 880 describes a storage battery and a device for catalytically recombining the discharge gases of the battery, which are interconnected through a filter of active carbon through which the battery discharge gases flow.

According to US-A-4 374 907 in a gaseous hydrogen and oxygen combining and condensing device for electrical batteries water droplets are used for washing a catalyst assembly of acid and alkali components of the battery and retarding poisoning of platinum in the catalyst assembly by these substances.

DE 29 04 842 A1 describes a device for combining gases within a valve regulated lead acid storage battery with a catalyst container having a wall and defining an internal chamber in which a catalyst is arranged. The catalyst is capable of reacting oxygen gas and hydrogen gas to form water vapor. The wall of the container is made of ceramic and is permeable to a limited extent. A catalyst poison filter is arranged around the catalyst and contains essentially copper oxide. This decomposes SbH₃ being a catalyst poison.

Also US-A 4 048 387 discloses a device for the catalytic recombination of oxyhydrogen gas produced by a lead-acid storage battery into water with a generally gastight housing defining a cavity which comprises a catalyst body to catalyze the recombination. The device further comprises a gas permeable containing means positioned in the cavity and surrounding the catalyst body, whereby a bed of an absorbing substance comprising a heavy metal manganite is located in the gas permeable containing means and surrounds the catalyst body. The absorbing substance serves to eliminate from the oxyhydrogen gas mixture catalyst poisoning gases comprising antimony-hydride and/or arsenic-hydride which are generated together with the oxyhydrogen gases during battery operation.

It is further believed that simpler and lower cost catalyst devices are desirable, as well as limiting the temperature of the catalytic reaction.

The object of the present invention is to prevent poisoning of the catalyst.

### Summary Of the Invention

The present invention provides a VRLA battery according to claim 1.

a micro-porous member. The filter material here can be ideally placed in the chamber between the catalyst and the micro-porous member. This forces the gas entering the chamber through the micro-porous member to pass first through the filter before reaching the catalyst and thereby maximizes the effectiveness of the filter. This design presents an embodiment that combines both poison filtering and temperature control in one easy to manufacture, low cost and inherently safe to the cell design. It operates on the principle that the heat of reaction, of the catalyst, can be controlled by limiting the amount of oxygen and hydrogen gas that is exposed to the catalyst. This control can be accomplished by selecting the proper pore size, developed and planar surface area, and/or wall thickness of the area that the hydrogen and oxygen pass through in the container that houses the catalyst. This area can be created from a porous high temperature acid resistant plastic material that has inherent hydrophobic properties with a porosity that is small enough to not allow a hydrogen flame front to pass through (Anti-Flame Protection). The hydrogen and oxygen gasses will then pass through the filter bed that will remove the catalyst poison before it reaches the active material.

Other embodiments of the invention are also provided, according to the subclaims, such as providing the micro-porous section in the container wall.

### Brief Description of the Drawings

Figure 1 is a cross sectional view of a device 10 having a flange;
Figure 1A is an exploded view of the device of Figure 1;
Figure 1 B is perspective view of the device of Figure 1 attached to a pressure relief valve;
Figure 2 is a perspective view of a flangless catalyst device held to a pressure relief valve by a holder;
Figure 2A is a perspective view of the holder of Figure 2;
Figure 2B is a perspective view of the catalyst device of Figure 2;
Figure 3 is a top perspective view of a vent boss of a Monoblock type battery cell showing the top of a 1/4 amp embodiment installed in the vent opening;
Figure 3A is an exploded view of the 1/4 amp device of Figure 3;
Figure 4 is a frontal view of another embodiment of the catalyst device;
Figure 5 is a cross sectional view of another embodiment;
Figure 6 is a cross sectional view of yet another embodiment;
Figure 7 is a cross sectional view of another embodiment; and
Figure 8 is a schematic view of a VRLA battery cell in accordance with the present invention.

### DETAILED DESCRIPTION OF THE INVENTION

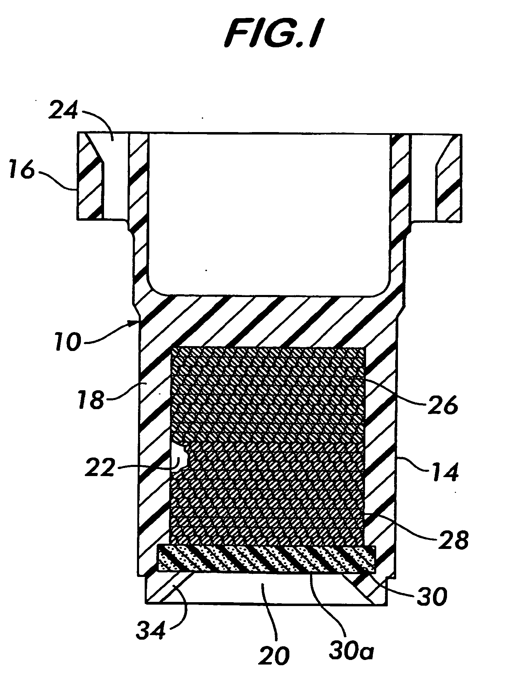

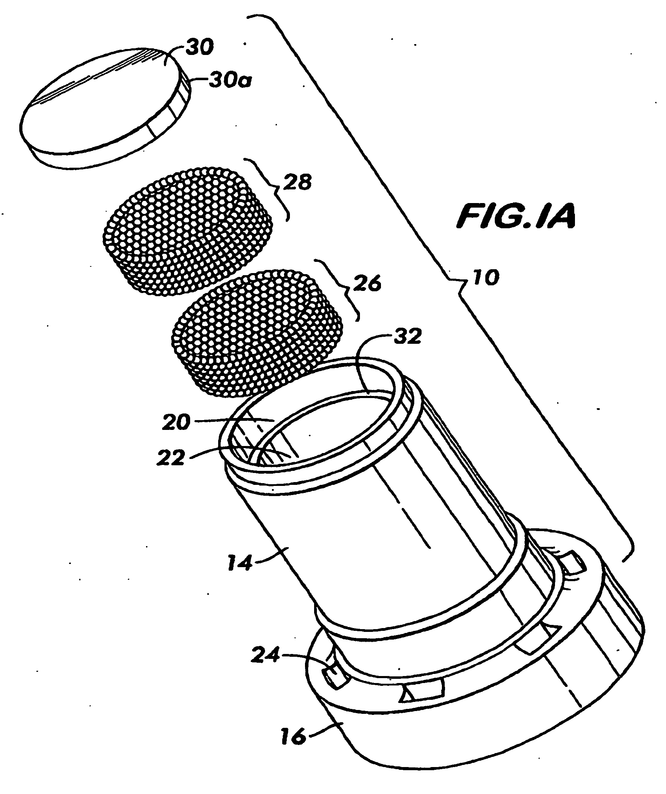

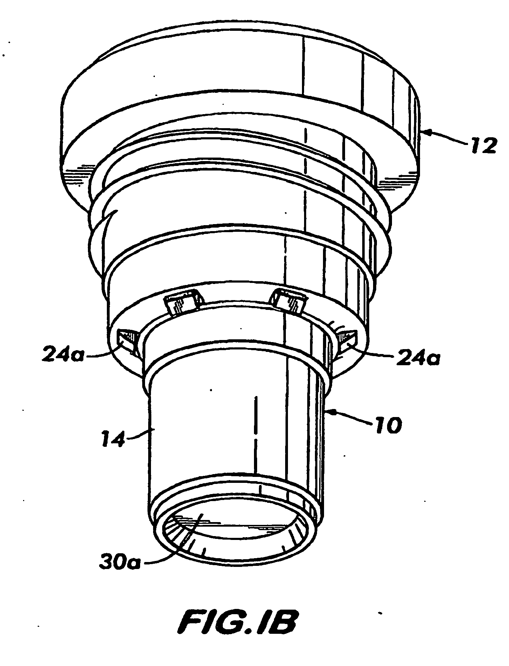

With reference to Figures 1, 1A and 1 B, a catalyst device 10 is configured for attachment to a pressure relief valve 12 (Figure 1B) of the type used with VRLA battery cells. The device 10 has a cylindrically shaped container 14 and is attached to an integral flange 16. The container 14 has a wall 18 defining an internal chamber 22. An opening 20 at an end of the container 14 permits access to the chamber 22 as described below. The container 14 is preferably made of high temperature plastic material resistant to sulfuric acid and suitable for the internal environment of a battery cell. The container material of this embodiment should also be impermeable to liquids and gases so that the gases can enter the chamber 22 only through the opening 20. A preferred material is Questra® made by Dow Chemical.

The flange 16 is integral to the container 14 and configured to fit a particular pressure relief valve 12. For pressure relief valves of other manufacturers, a flange configured specifically for the particular valve is readily provided by changing the mold insert in conjunction with the mold for the container 14. Here, the flange is configured to snap to the pressure relief valve 12 as shown, in Figure 1B, the flange having holes 24 (Figure 1 and 1A) for receiving snap pins 24a of the valve 12. Means of attachment other than a snap type connection may be used. For example, the pins 24a could be non-snap type pins that are inserted into the holes 24 of the flange, and then the ends of the pins 24a are melted by means such as heat staking or ultra sonic means to fix the container 14 to the pressure relief valve 12.

The chamber 22 contains a catalyst 26 for combining oxygen gas and hydrogen gas. Precious metal catalyst such as palladium and platinum may be used, a catalyst 26 of one-half percent palladium impregnated on an activated carbon substrate being preferred for the illustrated embodiment. It is understood that the uniform spheres representing the catalyst 26 as shown in the drawings are for illustrative purposes, the catalyst capable of being provided in many forms such as granules or fine powder.

Positioned between the catalyst 26 and the chamber opening 20, is a poison filter 28 for removing compounds that are poisonous to the catalyst. Suitable filter materials for the type of poisons found in VRLA cells include activated carbon, potassium carbonate (K₂CO₃), metals such as nickel, ruthenium, copper, and metal salts. A combination of multiple filter materials is preferred as some filter materials have a higher affinity or are more specific to particular poisons. In the illustrated embodiment, a multiple filter bed of 325 mesh activated carbon impregnated with 20% K₂CO₃ is preferred.

For acidic poisons, the filter materials can be treated by soaking with a 5% sodium bicarbonate and water solution then drying at 180°F (82 °C) for 24 hours to create an alkaline filter that will have a stronger affinity to react with acidic poisons.

The device 10 has a micro-porous section 30 through which the gas and vapor can pass between the chamber 22 and the environment outside the device 10 (the internal environment of the battery cell). In the present embodiment the micro-porous section 30 takes the form of disk shaped micro-porous member 30a covering the opening 20 as shown which is fixed on a shoulder 32 formed in the container 14. The micro-porous disk member 30a is heat sealed or ultrasonically welded in place - see the angled edge 34 in Figure 1 where the container was melted as part of the welding or heat staking process. The micro-porous member 30a is made of a porous material, preferably plastic, such as PVDF (polyvinylidene fluoride), PTFE (polytetrafluoroethylene) or polypropylene, and which is preferably hydrophobic in nature to water and the electrolyte (sulfuric acid in lead acid cells) in the battery cell. The pore size is such that only gas or vapor can pass through, but liquid will not. Likewise, the micro-porous section 30 should have a pore size small enough to not allow a hydrogen flame front to pass through. When the micro-porous member 30a is sealed in place in the opening 20, the catalyst 26 is completely sealed within the chamber 22 such that gas or vapor can pass between the chamber 22 and the environment outside the device 10 only by passing through the pores of the micro-porous section 30 (disk 30a).

The benefit of positioning the filter 28 between the catalyst 26 and micro-porous disk member 30a is readily seen. Gases entering the chamber 22, which may include compounds poisonous to the catalyst, reach the catalyst only after passing through the filter 28. It is possible to provide a mixture of the catalyst and filter within the chamber 22 rather than the stratified layers shown. Some poisons, however, have a stronger affinity for the catalyst than the filter material, and, where the filter material and catalyst are near each other, may go to and poison the catalyst rather than to the filter. The illustrated embodiment avoids this problem by forcing the poison first through the filter.

The present invention also permits control of the heat of reaction in the catalyst by limiting the amount of oxygen and hydrogen gas that is exposed to the catalyst 26. As previously discussed, the pore size in the micro-porous section 30 is chosen such that only gas or vapor is capable of passing through, and to also act as an anti-flame barrier. Additionally, in conjunction with other variables such as the planar surface area and the thickness of the micro-porous member 30a the pore size ultimately selected controls the amount or rate of gas that can pass into the chamber 22 and subsequently be exposed to the catalyst 26. This exposure determines the heat of reaction that is generated by the catalyst action of combining the oxygen and the hydrogen gases into water. Pore sizes that are known to work as a method of temperature control are, but not limited to, 1 to 40 microns. Varying the thickness of the micro-porous member 30a in conjunction with selecting pore size can also be used to control temperature.

In the illustrated embodiment of Figures 1, 1A, and 1 B, a preferred configuration has a cylindrical chamber 22 having a volume of approximately .35 cubic inches (5.74 cm³) (with internal diameter of .45 inches (1.14 cm)). The volume of catalyst 26 (1/2% palladium on an activated carbon substrate) is about .12 cubic inches (1.97 cm³); the volume of filter material 28 (325 mesh activated carbon impregnated with 20% K₂CO₃) is about .23 cubic inches (3.77 cm³). The catalyst 26 and filter 28 materials completely fill the chamber 22 and are held tightly within by the micro-porous disk 30a so that there is minimal movement and mixing of the materials even if the device 10 is shaken. It is seen that this embodiment has a ratio of 1/3 catalyst to 2/3 filter material by volume.

The disk shaped micro-porous member 30a is formed of PTFE, 1/8" inch (0.32 cm) thick, ½ inch (1.27 cm) diameter, and having a 25 micron pore size. This configuration provides a device 10 rated for about 1 Amp Faraday: 11-12 ml/minutes at standard temperature and pressure of 2 parts H₂ and 1 part O₂ passing through to the catalyst, and which generate a temperature in the range of 120°F to 140°F (49 °C to 60 °C) at these conditions.

In addition to providing temperature and poison control, the present invention also provides a simpler design over previous designs. One previous design uses a porous ceramic chamber that provided anti-flame protection and which is externally wrapped with a hydrophobic PTFE film to protect the internal catalyst from liquid. The PTFE film has a specific porosity that allows hydrogen, oxygen and gaseous water to pass through, but does not allow any liquids to contact the catalyst. The present invention preferably uses technology (the micro-porous section 30) that is inherently hydrophobic, anti-flame preventing, and micro-porous thus eliminating the need for the film and ceramic chamber while still serving the same functions. This results in a simpler and lower cost design..

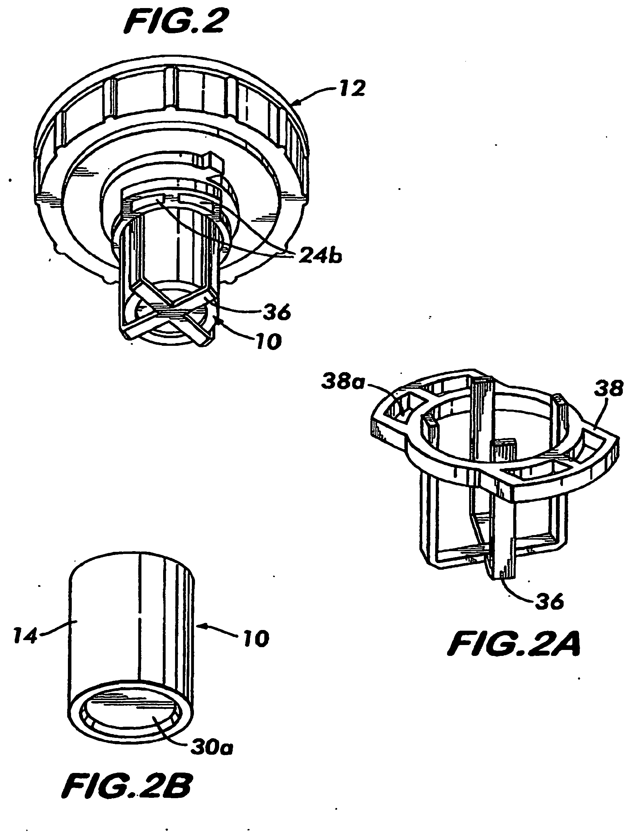

The present invention is also adaptable to battery cells and pressure relief valves of different manufacturers. As previously discussed, the flange 16 is formed to specifically fit the valve 12 shown in Figure 1 B. The basic container 14 can be standardized and produced with a mold designed to accept inserts for creating flanges configured to fit valves made by other manufacturers. If desired, no flange need be added, the container being retained to the valve by some other means. For example, a device 10 having a cylindrical container 14 similar to that shown in Fig. 1 but without the flange 16 is shown in Fig. 2B. The flangless device 10, as shown in Figure 2, is held to the valve 12 of another manufacturer by a holder 36, here a cage type holder as shown in Fig. 2A. The cage holder itself has a flange 38 for attaching to the valve 12, the pins 24b of the valve 12 being inserted in the holes 38a and melted to fix the cage 36, with the catalyst device 10 inserted within the cage, to the valve 12.

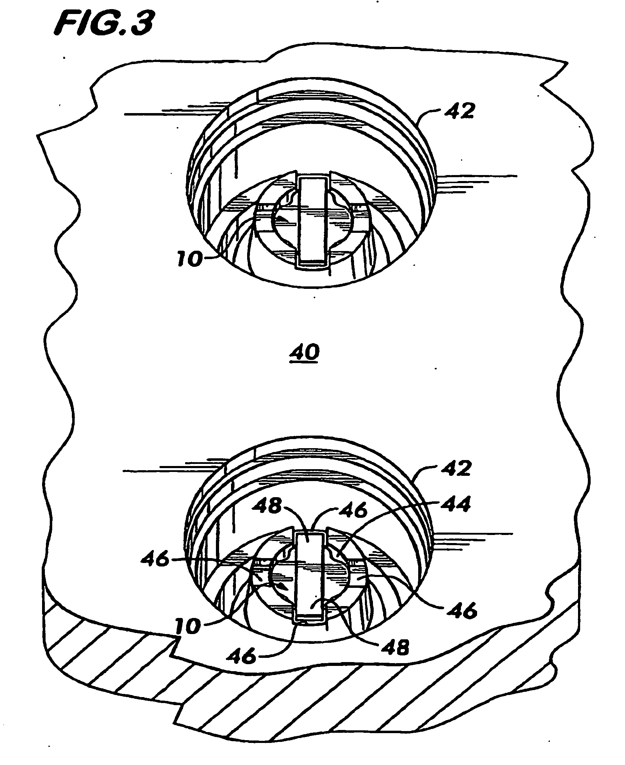

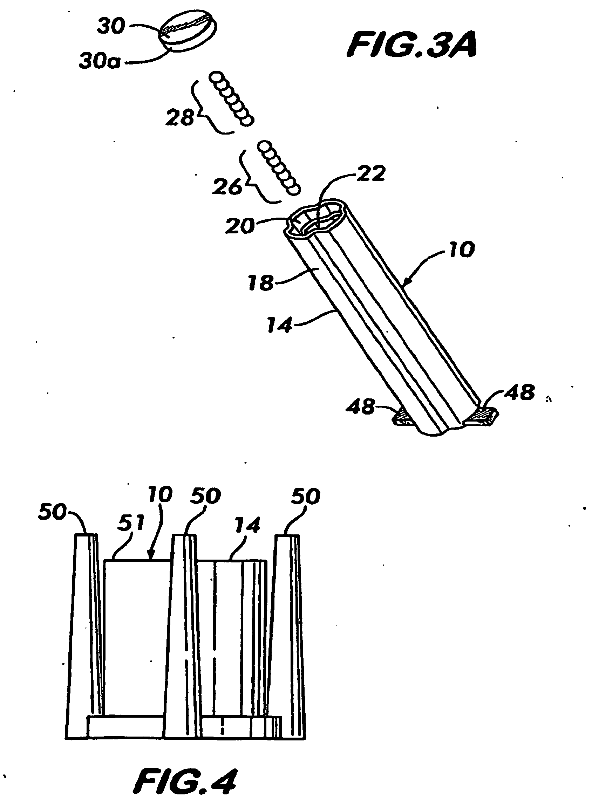

For some battery designs it is not possible to attach the catalyst device to the pressure relief valve. Illustrated in Figure 3 is the top view of a jar cover 40 for Monoblock type battery cells that have a vent boss 42 into which a pressure relief valve fits. The vent boss of this particular example has an opening 44 which has about a 6 mm diameter, and four recesses 46 around the opening 44. Other vent bosses of other manufacturers may have openings 44 of a different diameter. Shown in Figure 3A is a smaller version of the catalyst device 10 having a diameter (width) no larger than the vent opening, in this example about 6 mm, for fitting in the opening 44 of the vent boss 42. The container 14 has a non-porous wall 18 and an opening 20 into the chamber 22. In the chamber 22 is a layer of catalyst 26, a layer of filter 28, all of which is sealed from the environment of the battery cell by the micro-porous section 30 which is formed as a small micro-porous disk member 30a. Two tabs 48 integrally connected to the container 14 extend therefrom for fitting into the recesses 46 of the boss 42 and holding the device 10 in place when installed in the opening 44 as seen in Figure 3.

The configuration shown in Figures 3 and 3A is rated at about 1/4 Amp, the chamber 22 having a volume of about .02 cubic inches (0.33 cm³), 1/3 to ½ of which is filled with catalyst 26, the rest with filter material 28. The micro-porous disk member 30a being a PTFE disk of roughly 0.02 inches square surface area (0.13 cm²), 1/8 inches (0.32 cm) thick, and a pore size of 25 microns allowing 3 - 6 ml/minutes at standard temperature and pressure of 2 parts H₂ and 1 part O₂ passing through to the catalyst.

Another option would be to simply drop the catalyst device 10 into a battery cell. A configuration suitable for doing so is shown in Figure 4. Here the device 10 has a container 14 similar to that of Figure 1 formed with a series of legs 50 which extend beyond the top end 51 of the container which has the micro-porous disk member 30a so that no matter how the device 10 lands within the battery cell, the micro-porous member 30a will not sit flat against any object which may block the flow of gas.

With VRLA cells of the Gel type, spitting action within the cell may coat the micro-porous member 30a with gel and block the gas access to the catalyst depending on how the device 10 is positioned. A shield could be attached as a separate piece or could be part of the molded container itself to protect the porous hydrophobic disk and the catalyst active material from the spitting silica and silica gel. With non Gel cells such as AGM and liquid electrolyte cells, this should not be a problem.

The device 10 can be made to have a self-shutdown mode. If the heat of reaction reaches the melting temperature of the plastic used to house the active material, it will melt and physically cover the active material. This physical covering of the active material will block precious metal activation sites, rendering the catalyst ineffective and shutdown the reaction.

It is seen that the use of catalyst is made safer from the viewpoint that by limiting the temperature of the reaction there is no way that a catalyst of this design could possibly damage the cell, even if the cell is in a high gassing situation such as boost charge, or a cell failure mode. The catalyst is designed to bypass excess gas if the cell is creating more gas than the catalyst has been designed to recombine. This reaction limitation is controlled by the porous section 30 which has a predetermined gas flow rate limit.

Thus, the device can be attached directly to low temperature plastic materials such as polypropylene, ABS and other materials commonly used in batteries. This catalyst can be attached directly to vent caps, or other components of the battery.

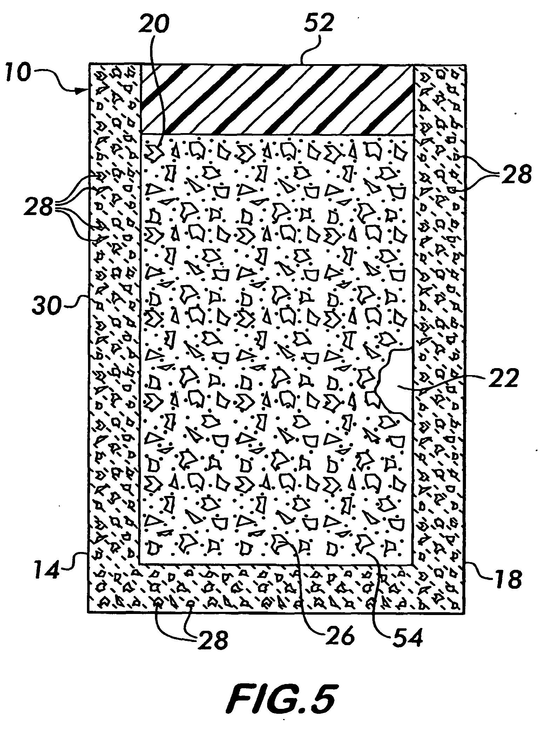

Another alternative embodiment of the present invention is now described with reference to the device 10 of Figure 5. Unlike the previous embodiment, here, the micro-porous section 30 is in the container wall 18. The device 10 has a cylindrical container 14 having a container wall 18 and defining a chamber 22. An opening 20 provides access to the chamber for adding the catalyst 26. The micro-porous section 30 is provided in at least a section of the wall 18 of the container 14, here the entire wall structure 18 being porous. The container 14 is made of a porous plastic material such as PVDF, Teflon, or Polypropylene. The opening 20 is sealed with a nonporous plug 52 so that the gas or vapor can pass only through the pores in the wall 18. Like the embodiment discussed above, the pore size of the porous section, here the wall 18, is chosen to allow gas to pass, but not liquid, and to prevent a flame front from passing through. Within these parameters, the pore size can be varied to control the amount or rate of gas that can pass through the chamber walls and subsequently be exposed to the catalyst active material, i.e., temperature control. Pore sizes for temperature control are preferably between 1 and 40 microns. Varying the wall thickness of the container in conjunction with the pore size and surface area of the container can also be used to control temperature.

The non porous plug 52 is preferably made of an epoxy that does not itself exhaust catalyst poisons and which is suitable for the environment in battery cells. Such materials include acrylic based compounds such as Loctite Material 3345 which are cured by Ultra Violet radiation for 15 seconds, or silicon based compounds such as Loctite Material 5091 partially cured by UV for 30 seconds and followed by a secondary moisture cure. A wadding of fiber glass material acts as a dam between the catalyst 26 and the plug 52 when the plug is first poured.

A thermal mass material 54 may be added with or without temperature control sized pores in the wall 18 to also help control temperature. As seen in Figure 5, the catalyst 26 is mixed with the thermal mass material 54 which can be made of a powder of a ceramic material or a plastic material (e.g., polypropylene, acrylic) or a metal (e.g., aluminum, copper, brass). It is believed that the powdered material should be of a size that is less than or equal to the size of the catalyst material, and that there be about 2 parts thermal mass material to 1 part catalyst material. This design is believed to work by increasing the thermal mass of the chamber, in other words, by spreading the heat of reaction over a larger mass.

Catalyst poison filter material 28 can also be added to the device 10 of the type shown in Figure 5. One possibility is to add filter material directly to the plastic material of the container 14. Filter material 28 such as activated carbon can be impregnated into the plastic of the container 14 during the molding process. One way of doing this is to mix the powders of the plastic and the filter materials 28 and then mold the mixture to form the container 14. Pores of the desired size are also added. One example is a mixture of 80% PVDF and 20% activated carbon with K₂CO₃. The addition of the filter material, however, may lesson the hydrophobic nature of the container. A porous PTFE film wrap around the container 14 as disclosed in U.S. Application Number 09/022,336 (see WO 99/41798 for related applications having similar disclosures) could be added if desired to increase the hydrophobic nature.

Another possibility (not shown in Figure 5) is to mix the filter material 28 with the catalyst 26 in the chamber 22. As discussed above, however, where poisons are not forced first through a filter, poisons that have a high affinity for the catalyst may still poison the catalyst.

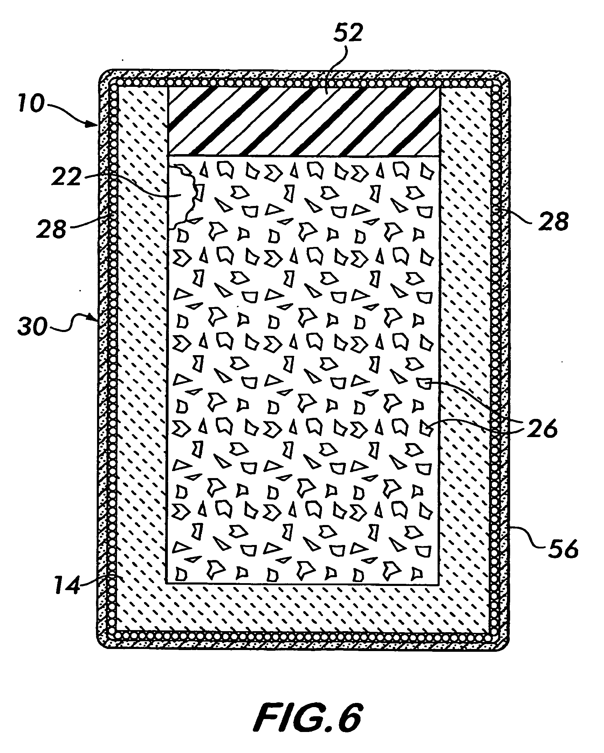

Shown in Figure 6 is a means of adding poison control to a porous ceramic type container. Here a filter material 28 of K₂CO₃ is coated onto the outside of the container 14. The ceramic container is dipped in a water solution of dissolved filter material and then dried to leave a coating of filter material. The ceramic container is then wrapped in porous PTFE film 56 which acts as the micro-porous section 30. Other solvent soluble filter materials may be used as well.

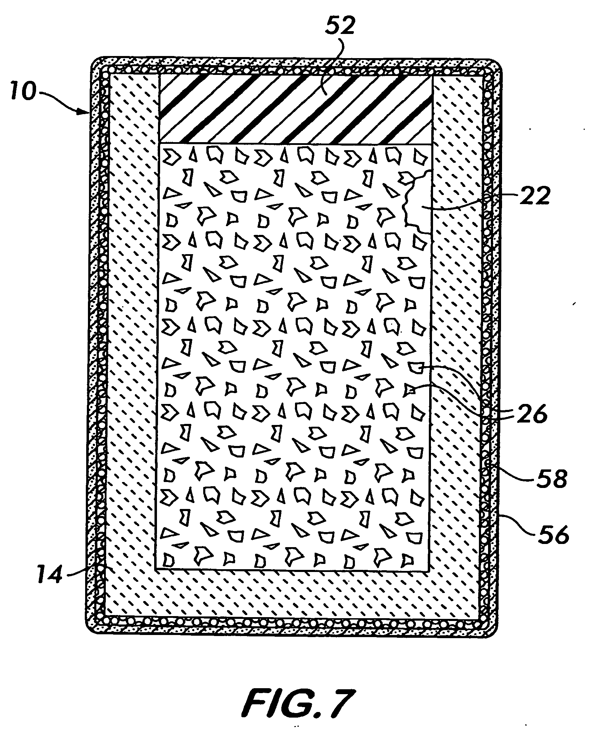

Shown in Figure 7 is a means of adding filter material to any type container by a wrap. A film 58 impregnated with filter material is wrapped around the outside of the container 14 after it is loaded with catalyst 26 and the opening 20 sealed. This film could be laminated to the back of a porous PTFE film, or installed as a separate film which would require a separate porous PTFE film wrap 56 on top.

It is seen that an advantageous catalyst device is provided that can be simpler and less costly to produce than previously known devices. Moreover, poison function is included, and temperature control function can be included. The invention also allows for greater flexibility in design of catalyst assemblies to fit a great number of cell designs. For example, the plastic container, whether non-porous or porous, has the advantage of allowing a flange to be added for easy attachment to a pressure relief valve and thereby eliminates the need for holders such as the cage holder where poison and temperature control are not desired. Moreover, the flange can be configured for the relief valve of a particular manufacturer.

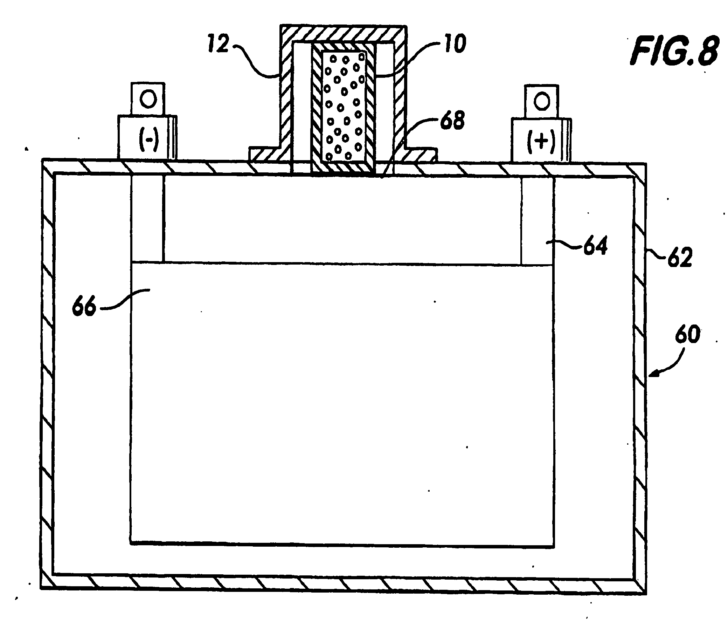

The catalyst device can be added to a battery cell by itself, attached to a pressure relief valve, or some other means of placing the catalyst in contact with the gasses within a battery cell. A VRLA cell 60 is schematically shown in Figure 8 and has a sealed housing 62, a positive electrode 64 having active material, a negative electrode 66 having active material and which is in spaced relationship to said positive electrode, and an electrolyte in contact with the positive and negative electrodes (normally in the form of plates). The electrolyte may be contained in a separator means so that there is no "free" electrolyte in the cell. The VRLA cell is typically charged on a continuous basis and over a long-term, for example, in excess of five years. The word "continuous" as used herein in connection with the charging of the cell is intended to mean an uninterrupted flow of current, as well as an intermittent flow of current, for example, a pulsating current. A VRLA cell is typically charged at a voltage having a value that is slightly in excess of the value of the open-circuit voltage of the cell which, for example, is typically about 2.15 volts. The term "slightly in excess" means a value no greater than about 0.3 volt above the open circuit voltage of the cell in applications in which there is an intermittent flow of current. In applications in which the flow of current is uninterrupted during charging, it is preferred that the charge voltage have a value that is no greater than about 0.2 volt above the open-circuit voltage of the cell. As discussed above, the catalyst device 10 is ideally attached to the pressure relief valve 12 of the VRLA cell which is positioned in a gas space 68 within the housing where oxygen and hydrogen gas collect. The pressure relief valve 12 allows excess gas to escape the sealed housing and is preferably removable. Thus combining the catalyst device with the relief valve 12 makes the catalyst device removable while assuring it is in contact with the gas for recombination.

### Parameters and Considerations for Sizing Catalysts for VRLA Cells

It is believed that standard AGM VRLA cells exhaust 100 ml/day/100Ah of an oxygen hydrogen mixture at standard VRLA float charging voltages at 90°F (32 °C). It is further believed that similar AGM VRLA cells with catalyst exhaust 20 ml/day/100Ah of pure hydrogen (due to positive plate corrosion) at 90°F (32 °C). Such gassing data indicates the catalyst must recombine 80 ml/day/100Ah to keep the negative plates of a VRLA battery fully charged.

The minimum amount of Gas to be Combined: The largest AGM VRLA cell currently known to be produced is 1600Ah. Faraday's law states that 1 Amp of current used to breakdown water into stoichiometric Hydrogen and Oxygen gas will produce 11.3 ml/min 2 H₂ - 1O₂ at STP. Therefore the catalyst must recombine at most 0.079 amps of gas in a 1600 Ah AGM VRLA cell on float charge at 90°F (32 °C). (1600Ah/100Ah)*(80ml/day/100Ah)/((11.3ml/min)*(60min/hr)*(24hr/day)).

The amount of gas produced by VRLA cells will change with the cell operating temperature based on Arhennius' equation. This equation shows that the volume of gas recombined by the catalyst will increase or decrease by approximately a factor of 2 for every 10°C change in temperature. (10°C rise in temperature will double the amount of gas needed to recombine (80ml/day/100Ah @32°C = 160ml/day/100Ah @ 42°C))

VRLA cell manufacturers recommend VRLA cells be operated in a climate-controlled environment of 77°F (25 °C), the 90°F (32 °C) used for testing and the above data calculations represents a maximum recombination situation.

Heat Generation: The recombination reaction of oxygen and hydrogen to water will create 275 BTU/ft³ of heat. (1ft³ of stoichiometric oxy-hydrogen = 28310 ml of gas at STP). Therefore catalysts produce 0.073BTU/min of heat for every 11.3 ml/min (1 amp) of stoichiometric oxy-hydrogen.

Maximum Steady State Operating Temperature: This 0.073 Btu/min/amp of heat is dissipated from the catalyst to the surroundings through a combination of heat flow release (conduction, convection, radiation). The micro-porous disk of the 1 amp catalyst device 10 is specifically designed (by specifying pore size, surface area, thickness, etc.) to allow 11-12 ml/min stoichiometric oxy-hydrogen gas into the catalyst chamber and the resultant water vapor to diffuse out of the chamber. This specified gas flow rate generates the stated 0.073 BTU/min/amp of heat, which is dissipated by the catalyst to its surroundings resulting in a steady state operating temperature of 120-140°F (49 - 60 °C) measured at the outside surface of the catalyst chamber.

There is a similar heat generation to operating temperature relationship for the 0.25 amp catalyst device 10. The geometry of the 0.25 amp catalyst device allows between 3 and 6 ml of stoichiometric oxy-hydrogen into the catalyst with resultant water vapor exiting. The recombination of this amount of oxy-hydrogen generates 0.018 to 0.037 BTU/min of heat. This amount of heat generates a steady state operating temperature of 100-120°F (38 - 49 °C) measured on the outside surface the 0.25 amp catalyst chamber.

The enthalpy generated by the catalyst reaction is a function of the stoichiometric oxy hydrogen gas flow rate through the micro-porous membrane (member), the amount of catalytic material available to react with available gas and the packing density of the catalytic material inside the catalyst chamber.

The gas flow rate through the micro-porous membrane (member) is a function of membrane pore size, porosity, and surface area perpendicular to gas flow and is an inverse function of membrane thickness (defined as the length of the membrane perpendicular to gas flow).

An example of a properly sized micro-porous membrane (member) for this application is the preferred embodiment, using a micro-porous PTFE disk with a surface area normal to gas flow of: 0.196 in² (1.265 cm²), a pore size of 25 microns, a porosity of 15% and a thickness perpendicular to gas flow of 0.125 in (0.32 cm). This size disk limits stoichiometric oxy-hydrogen gas flow to 10-15 ml/min, which limits the enthalpy generated by the catalyst embodiment to 0.064 BTU/min - 0.090 BTU/min.

Regarding the filter material, the filters may have a finite life of limited capacity to absorb poisons. Thus over the life of the battery, a filter, or the container with the filter, may need to be replaced.

## Claims

1. A valve regulated lead acid (VRLA) battery cell (60), said battery being constructed of a material exhausting a catalyst poison which comprises hydrogen sulfide and said battery cell comprising:
a sealed housing (62);
a positive electrode (64) positioned in the housing (62);
a negative electrode (66) positioned in the housing (62) in spaced relationship from the positive electrode (64);
an electrolyte in said housing (62) in contact with said positive and negative electrodes (64, 66);
a gas space (68) within said housing (62) in which oxygen and hydrogen gases collect;
a pressure relief valve (12) which allows gas to escape from the housing (62) and which prevents oxygen gas from outside the housing (62) from entering the housing to contact said negative electrode (66); and
a device (10) for combining gases within the battery cell (60), the device (10) comprising:
a catalyst container (14) having a container wall (18) and defining an Internal chamber (22);
a catalyst (26) arranged within said chamber (22), said catalyst (26) capable of reacting oxygen gas and hydrogen gas to form water vapor;
a micro-porous section (30) having pores through which said oxygen gas and hydrogen gas can pass between an outside of said container (14) and said Internal chamber (22), said gases containing said hydrogen sulfide which poisons said catalyst;
and the device (10) further comprising a catalyst poison fitter (28) which is arranged to be in contact with at least a portion of said oxygen and hydrogen gases, that include said catalyst poison flowing from said outside of said container (14) to said catalyst (26), in order to remove at least a portion of said hydrogen sulfide In said oxygen and hydrogen gases, wherein said poison filter comprises a metal salt.

2. A VRLA battery cell in accordance with claim 1 wherein said micro-porous section (30) is arranged in at least a portion of said container wall (18).

3. A VRLA battery cell in accordance with claim 2 wherein said container (14) comprises a plastics material.

4. A VRLA battery cell in accordance with claim 3 wherein said pores of said micro-porous section (30) are sized in the range of about 0.1 to about 400 microns.

5. A VRLA battery cell in accordance with claim 3 wherein the material of said filter (28) is impregnated into said plastic material.

6. A VRLA battery cell in accordance with claim 1 wherein said filter (28) is arranged within said chamber (22).

7. A VRLA battery cell in accordance with claim 6 wherein said filter (28) is arranged in a layer adjacent to said catalyst (26).

8. A VRLA battery cell in accordance with claim 1 wherein said container (14) is substantially non-porous and has an opening (20) to said chamber (22), and wherein said micro-porous section (30) comprises a micro-porous hydrophobic member (30a) arranged to seal said opening (20) and having pores of a size to allow gas to pass there through to said chamber (22).

9. A VRLA battery cell in accordance with claim 1 wherein said material of said poison filter (28) comprises activated carbon.

10. A VRLA battery cell in accordance with claim 9 wherein said activated carbon is impregnated with potassium carbonate.

11. A VRLA battery cell in accordance with claim 1 wherein said device (10) comprises said pressure relief valve (12).

12. A VRLA battery cell In accordance with claim 1 wherein said container (14) is made of a plastic material and is attached to a flange (16) capable of attaching to said pressure relief valve (12).

13. A VRLA battery cell in accordance with claim 1 wherein at least one of the pore size, planar surface area and thickness of said micro-porous section (30) is selected to control the amount or rate at which said oxygen and hydrogen gases can pass Into said internal chamber (22) to control the heat generated by the catalytic combination of said oxygen and hydrogen gases.

14. A VRLA battery cell in accordance with claim 8 wherein said catalyst poison filter (28) is arranged within said chamber (22) and the pores are of suitable size to be a barrier to liquids.

15. A VRLA battery cell in accordance with claim 14 wherein said filter (28) is arranged between said catalyst (26) and said micro-porous member (30a).

16. A VRLA battery cell in accordance with claim 15 wherein said container (14) comprises a plastic material.

17. A VRLA battery cell in accordance with claim 14 wherein said micro-porous member (30a) comprises a plastic material.

18. A VRLA battery cell in accordance with claim 14 wherein said container (14) is cylindrical, has no more than one said opening (20), and comprises a plastic material, and wherein said micro-porous member (30a) comprises a plastic material.

19. A VRLA battery cell In accordance with claim 14 wherein said container (14) is attached to said pressure relief valve (12).

20. A VRLA battery cell in accordance with claim 14 wherein said container (14) is made of a plastic material and Is attached to a flange (16) capable of attaching to said pressure relief valve (12).

21. A VRLA battery cell in accordance with claim 19 wherein said container (14) Is supported in a holder (36) attached to said pressure relief valve (12).

22. A VRLA battery cell in accordance with claim 14 further comprising at least one tab (48) extending from said container (14), said tab (48) capable of engaging a complementary recess (46) for holding said device (10) in place.

23. A VRLA battery cell in accordance with claim 14 wherein at least one of the pore size, planar surface area and thickness of said micro-porous member (30a) is selected to control the amount or rate at which said oxygen and hydrogen gases can pass into said internal chamber (22) to control the heat generated by the catalystic combination of said oxygen and hydrogen gases.

24. A VRLA battery cell in accordance with claim 8 wherein said poison filter (28) is arranged within said chamber (22).

25. A VRLA battery cell in accordance with claim 24 wherein said micro-porous hydrophobic member (30a) comprises a single piece of plastic material.

26. A VRLA battery cell in accordance with claim 8 wherein at least one of the pore size, planar surface area and thickness of said micro-porous member (30a) is selected to control the amount or rate at which said oxygen and hydrogen gases can pass into said interval chamber (22) to control the heat generated by the catalytic combination of said oxygen and hydrogen gases.

27. A VRLA battery cell in accordance with claim 1 wherein said poison filter (28) comprises potassium carbonate.

## Patentansprüche

1. Ventilgeregelte Blei-Säure (VRLA)-Batteriezelle (60), wobei die Batterie aus einem Material, das ein Schwefelwasserstoff aufweisendes Katalysatorgift abgibt, hergestellt ist und die Batteriezelle aufweist:
ein abgedichtetes Gehäuse (62);
eine positive Elektrode (64), die in dem Gehäuse (62) positioniert ist;
eine negative Elektrode (66), die in dem Gehäuse (62) in beabstandeter Beziehung von der positiven Elektrode (64) positioniert ist;
einen Elektrolyten in dem Gehäuse (62), der in Kontakt mit der positiven und der negativen Elektrode (64, 66) ist;
einen Gasraum (68) innerhalb des Gehäuses (62), in dem sich Sauerstoff- und Wasserstoffgase sammeln;
ein Überdruckventil (12), welches Gas erlaubt, aus dem Gehäuse (62) zu entweichen und welches Sauerstoffgas daran hindert, von außerhalb des Gehäuses (62) in das Gehäuse einzutreten und in Berührung mit der negativen Elektrode (66) zu kommen; und
eine Einrichtung (10) zum Vereinigen von Gasen innerhalb der Batteriezelle (60), wobei die Einrichtung (10) aufweist:
einen Katalysatorbehälter (14), der eine Behälterwandung (18) hat und eine innere Kammer (22) begrenzt;
einen Katalysator (26), der innerhalb der Kammer (22) angeordnet ist und dazu in der Lage ist, Sauerstoffgas und Wasserstoffgas in Reaktion zu bringen, um Wasserdampf zu bilden;
einen mikroporösen Teil (30) mit Poren, durch die das Sauerstoffgas und das Wasserstoffgas hindurchtreten können zwischen einer Außenseite des Behälters (14) und der inneren Kammer (22), wobei die Gase den besagten Schwefelwasserstoff enthalten, welcher den Katalysator vergiftet;
und die Einrichtung (10) ferner aufweist ein Katalysatorgiftfilter (28), das angeordnet ist, um in Kontakt mit wenigstens einem Teil der Sauerstoff- und Wasserstoffgase zu sein, die das Katalysatorgift enthalten, das von der Außenseite des Behälters (14) zu dem Katalysator (26) strömt, um zumindest einen Teil des Schwefelwasserstoffs in den Sauerstoff- und Wasserstoffgasen zu entfernen, wobei das Giftfilter ein Metallsalz aufweist.

2. VRLA-Batteriezelle gemäß Anspruch 1, wobei der mikroporöse Teil (30) in wenigstens einem Abschnitt der Behälterwandung (18) angeordnet ist.

3. VRLA-Batteriezelle gemäß Anspruch 2, wobei der Behälter (14) ein Kunststoffmaterial aufweist.

4. VRLA-Batteriezelle gemäß Anspruch 3, wobei die Poren des mikroporösen Teils (30) eine Größe in dem Bereich von ungefähr 0,1 bis ungefähr 400 Mikron aufweisen.

5. VRLA-Batteriezelle gemäß Anspruch 3, wobei das Material des Filters (28) in das Kunststoffmaterial imprägniert ist.

6. VRLA-Batteriezelle gemäß Anspruch 1, wobei das Filter (28) innerhalb der Kammer (22) angeordnet ist.

7. VRLA-Batteriezelle gemäß Anspruch 6, wobei das Filter (28) in einer zu dem Katalysator (26) benachbarten Schicht angeordnet ist.

8. VRLA-Batteriezelle gemäß Anspruch 1, wobei der Behälter (14) im Wesentlichen nicht-porös ist und eine Öffnung (20) zu der Kammer (22) besitzt und wobei der mikroporöse Teil (30) ein mikroporöses hydrophobes Bauteil (30a) aufweist, das angeordnet ist, um die Öffnung (20) abzudichten, und Poren einer Größe besitzt, die Gas erlaubt, zu der Kammer (22) hindurchzugelangen.

9. VRLA-Batteriezelle gemäß Anspruch 1, wobei das Material des Giftfilters (28) Aktivkohle aufweist.

10. VRLA-Batteriezelle gemäß Anspruch 9, wobei die Aktivkohle mit Kaliumcarbonat imprägniert ist.

11. VRLA-Batteriezelle gemäß Anspruch 1, wobei die Einrichtung (10) das Überdruckventil (12) aufweist.

12. VRLA-Batteriezelle gemäß Anspruch 1, wobei der Behälter (14) aus einem Kunststoffmaterial hergestellt und an einem Flansch (16) befestigt ist, der an dem Überdruckventil (12) befestigt werden kann.

13. VRLA-Batteriezelle gemäß Anspruch 1, wobei zumindest eine der Eigenschaften Porengröße, ebene Flächengröße und Dicke des mikroporösen Teils (30) ausgewählt ist, um die Menge oder Rate zu kontrollieren, mit der die Sauerstoff- und Wasserstoffgase in die innere Kammer (22) hindurchgelangen können, um die durch die katalytische Vereinigung der Sauerstoff- und Wasserstoffgase erzeugte Wärme zu kontrollieren.

14. VRLA-Batteriezelle gemäß Anspruch 8, wobei das Katalysatorgiftfilter (28) innerhalb der Kammer (22) angeordnet ist und die Poren von geeigneter Größe sind, um eine Barriere gegenüber Flüssigkeiten darzustellen.

15. VRLA-Batteriezelle gemäß Anspruch 14, wobei das Filter (28) zwischen dem Katalysator (26) und dem mikroporösen Bauteil (30a) angeordnet ist.

16. VRLA-Batteriezelle gemäß Anspruch 15, wobei der Behälter (14) ein Kunststoffmaterial ausweist.

17. VRLA-Batteriezelle gemäß Anspruch 14, wobei das mikroporöse Bauteil (30a) ein Kunststoffmaterial aufweist.

18. VRLA-Batteriezelle gemäß Anspruch 14, wobei der Behälter (14) zylindrisch ist, nicht mehr als eine besagte Öffnung (20) besitzt und ein Kunststoffmaterial aufweist, und wobei das mikroporöse Bauteil (30a) ein Kunststoffmaterial aufweist.

19. VRLA-Batteriezelle gemäß Anspruch 14, wobei der Behälter (14) an dem Überdruckventil (12) befestigt ist.

20. VRLA-Batteriezelle gemäß Anspruch 14, wobei der Behälter (14) aus einem Kunststoffmaterial hergestellt und an einem Flansch (16) befestigt ist, der an dem Überdruckventil (12) befestigt werden kann.

21. VRLA-Batteriezelle gemäß Anspruch 19, wobei der Behälter (14) gehalten ist in einem Halter (36), der an dem Überdruckventil (12) befestigt ist.

22. VRLA-Batteriezelle gemäß Anspruch 14, ferner aufweisend zumindest einen Streifen (48), der sich von dem Behälter (14) erstreckt und mit einer komplementären Vertiefung (46) zum Halten der Einrichtung in der Position in Eingriff gelangen kann.

23. VRLA-Batteriezelle gemäß Anspruch 14, wobei zumindest eine der Eigenschaften Porengröße, ebene Flächengröße und Dicke des mikroporösen Bauteils (30a) ausgewählt ist, um die Menge oder Rate zu kontrollieren, mit der die Sauerstoff- und Wasserstoffgase in die innere Kammer (22) hindurchgelangen können, um die durch die katalytische Vereinigung der Sauerstoff- und Wasserstoffgase erzeugte Wärme zu kontrollieren.

24. VRLA-Batteriezelle gemäß Anspruch 8, wobei das Giftfilter (28) innerhalb der Kammer (22) angeordnet ist.

25. VRLA-Batteriezelle gemäß Anspruch 24, wobei das mikroporöse hydrophobe Bauteil (30a) ein einstückiges Kunststoffmaterial aufweist.

26. VRLA-Batteriezelle gemäß Anspruch 8, wobei zumindest eine der Eigenschaften Porengröße, ebene Flächengröße und Dicke des mikroporösen Bauteils (30a) ausgewählt ist, um die Menge oder Rate zu kontrollieren, mit der die Sauerstoff- und Wasserstoffgase in die innere Kammer (22) hindurchgelangen können, um die durch die katalytische Vereinigung der Sauerstoff- und Wasserstoffgase erzeugte Wärme zu kontrollieren.

27. VRLA-Batteriezelle gemäß Anspruch 1, wobei das Giftfilter (28) Kaliumcarbonat aufweist.

## Revendications

1. Cellule (60) de batterie à l'acide et au plomb régulée par vanne ("valve regulated lead acid" - VRLA), ladite batterie étant constituée d'un matériau qui dégage un poison de catalyseur qui comporte du sulfure d'hydrogène, ladite cellule de batterie comprenant :
un boîtier scellé (62),
une électrode positive (64) disposée dans le boîtier (62),
une électrode négative (66) disposée dans le boîtier (62) à distance de l'électrode positive (64),
un électrolyte en contact avec ladite électrode positive et ladite électrode négative (64, 66) dans ledit boîtier (62),
à l'intérieur dudit boîtier (62), un espace (68) pour gaz dans lequel l'oxygène et l'hydrogène gazeux se rassemblent,
une soupape (12) de délestage de pression qui permet aux gaz de s'échapper du boîtier (62) et qui empêche que l'oxygène gazeux présent à l'extérieur du boîtier (62) pénètre dans le boîtier pour entrer en contact avec ladite électrode négative (66) et
un dispositif (10) qui combine les gaz dans la cellule de batterie (60), le dispositif (10) comprenant :
un récipient (14) de catalyseur présentant une paroi de récipient (18) et définissant une chambre intérieure (22),
un catalyseur (26) disposé dans ladite chambre (22), ledit catalyseur (26) étant capable de réagir avec l'oxygène et l'hydrogène gazeux pour former de la vapeur d'eau,
une partie microporeuse (30) présentant des pores par lesquels ledit oxygène et ledit hydrogène gazeux peuvent passer entre l'extérieur dudit récipient (14) et ladite chambre intérieure (22), lesdits gaz contenant ledit sulfure d'hydrogène qui empoisonne ledit catalyseur,
le dispositif (10) comprenant en outre un filtre (28) à poison de catalyseur agencé de manière à être en contact avec au moins une partie dudit oxygène et dudit hydrogène gazeux qui comprennent ledit poison de catalyseur s'écoulant depuis ledit extérieur dudit récipient (14) vers ledit catalyseur (26), pour enlever au moins une partie dudit sulfure d'hydrogène présent dans ledit oxygène et ledit hydrogène gazeux, ledit filtre à poison comprenant un sel métallique.

2. Cellule de batterie VRLA selon la revendication 1, dans lequel ladite partie microporeuse (30) est agencée dans au moins une partie de ladite paroi (18) du récipient.

3. Cellule de batterie VRLA selon la revendication 2, dans lequel ledit récipient (14) comprend une matière plastique.

4. Cellule de batterie VRLA selon la revendication 3, dans lequel lesdits pores de ladite partie microporeuse (30) sont dimensionnés dans la plage comprise entre environ 0,1 et environ 400 micromètres.

5. Cellule de batterie VRLA selon la revendication 3 dans laquelle le matériau dudit filtre (28) imprègne ladite matière plastique.

6. Cellule de batterie VRLA selon la revendication 1, dans laquelle ledit filtre (28) est agencé à l'intérieur de ladite chambre (22).

7. Cellule de batterie VRLA selon la revendication 6, dans laquelle ledit filtre (28) est agencé dans une couche adjacente audit catalyseur (26).

8. Cellule de batterie VRLA selon la revendication 1, dans laquelle ledit récipient (14) est essentiellement non poreux et présente une ouverture (20) vers ladite chambre (22) et dans laquelle ladite partie microporeuse (30) comprend un élément hydrophobe microporeux (30a) agencé pour fermer ladite ouverture (20) et présentant des pores d'une taille qui permet aux gaz de les traverser en direction de ladite chambre (22).

9. Cellule de batterie VRLA selon la revendication 1, dans laquelle ledit matériau dudit filtre (28) à poison comprend du charbon actif.

10. Cellule de batterie VRLA selon la revendication 9, dans laquelle ledit charbon actif est imprégné de carbonate de potassium.

11. Cellule de batterie VRLA selon la revendication 1, dans laquelle ledit dispositif (10) comprend ladite soupape (12) de délestage de pression.

12. Cellule de batterie VRLA selon la revendication 1, dans laquelle ledit récipient (14) est réalisé en matière plastique et est fixé sur une bride (16) qui peut être fixée sur ladite soupape (12) de délestage de pression.

13. Cellule de batterie VRLA selon la revendication 1, dans laquelle la taille des pores, la superficie plane et/ou l'épaisseur de ladite partie microporeuse (30) sont sélectionnées de manière à contrôler la quantité ou le débit auxquels ledit oxygène gazeux et ledit hydrogène gazeux peuvent passer dans ladite chambre intérieure (22), de manière à contrôler la chaleur produite par la combinaison catalytique dudit oxygène gazeux et dudit hydrogène gazeux.

14. Cellule de batterie VRLA selon la revendication 8, dans laquelle ledit filtre (28) à poison de catalyseur est agencé à l'intérieur de ladite chambre (22) et les pores ont une taille permettant de former une barrière aux liquides.

15. Cellule de batterie VRLA selon la revendication 14, dans laquelle ledit filtre (28) est agencé entre ledit catalyseur (26) et ledit élément microporeux (30a).

16. Cellule de batterie VRLA selon la revendication 15, dans laquelle ledit récipient (14) comprend une matière plastique.

17. Cellule de batterie VRLA selon la revendication 14, dans laquelle ledit élément microporeux (30a) comprend une matière plastique.

18. Cellule de batterie VRLA selon la revendication 14, dans laquelle ledit récipient (14) est cylindrique, ne présente pas plus d'une desdites ouvertures (20) et comprend une matière plastique, ledit élément microporeux (30a) comprenant une matière plastique.

19. Cellule de batterie VRLA selon la revendication 14, dans laquelle ledit récipient (14) est fixé sur ladite soupape (12) de délestage de pression.

20. Cellule de batterie VRLA selon la revendication 14, dans laquelle ledit récipient (14) est réalisé en matière plastique et est fixé sur une bride (16) qui peut être fixée sur ladite soupape (12) de délestage de pression.

21. Cellule de batterie VRLA selon la revendication 19, dans laquelle ledit récipient (14) est soutenu dans un support (36) fixé sur ladite soupape (12) de délestage de pression.

22. Cellule de batterie VRLA selon la revendication 14, comprenant en outre au moins une patte (48) qui déborde dudit récipient (14), ladite patte (48) pouvant engager un creux complémentaire (46) pour maintenir ledit dispositif (10) en position.

23. Cellule de batterie VRLA selon la revendication 14, dans laquelle la taille des pores, la superficie plane et/ou l'épaisseur de ladite partie microporeuse (30a) sont sélectionnées de manière à contrôler la quantité ou le débit auxquels ledit oxygène gazeux et ledit hydrogène gazeux peuvent passer dans ladite chambre intérieure (22), de manière à contrôler la chaleur produite par la combinaison catalytique dudit oxygène gazeux et dudit hydrogène gazeux.

24. Cellule de batterie VRLA selon la revendication 8, dans laquelle ledit filtre (28) à poison est agencé dans ladite chambre (22).

25. Cellule de batterie VRLA selon la revendication 24, dans laquelle ledit élément hydrophobe microporeux (30a) comprend un seul morceau de matière plastique.

26. Cellule de batterie VRLA selon la revendication 8, dans laquelle la taille des pores, la superficie plane et/ou l'épaisseur de ladite partie microporeuse (30a) sont sélectionnées de manière à contrôler la quantité ou le débit auxquels ledit oxygène gazeux et ledit hydrogène gazeux peuvent passer dans ladite chambre intérieure (22), de manière à contrôler la chaleur produite par la combinaison catalytique dudit oxygène gazeux et dudit hydrogène gazeux.

27. Cellule de batterie VRLA selon la revendication 1, dans laquelle ledit filtre (28) à poison comprend du carbonate de potassium.
